Europäisches Patentamt

European Patent Office

Office européen des brevets

(19)

(11) Veröffentlichungsnummer: **0 462 367 A2**

## (12) EUROPÄISCHE PATENTANMELDUNG

(21) Anmeldenummer: 91105388.2

(22) Anmeldetag: 05.04.91

(51) Int. Cl.5: **C08G 63/91**, C08G 63/685, C08G 63/682, C06B 45/10

(30) Priorität: 16.06.90 DE 4019322

(43) Veröffentlichungstag der Anmeldung:
27.12.91 Patentblatt 91/52

(84) Benannte Vertragsstaaten:
**DE FR GB**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Wassmann, Friedrich-Wilh., Dr. Dipl.-Chem.**
**Bachstrasse 12**
**W-7507 Pfinztal 1(DE)**
Erfinder: **Keicher, Thomas, Dipl.-Chem.**
**Schwarzwaldstr. 27**
**W-7507 Pfinztal 3(DE)**
Erfinder: **Löffel, Dieter**
**Fliederstr. 8**
**W-7507 Pfinztal 1(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**W-7500 Karlsruhe 41(DE)**

(54) Verfahren zur Herstellung energiereicher Polyester und deren Verwendung.

(57) Energiereiche Polyester werden dadurch hergestellt, daß halogenhaltige oder halogenfreie Di- oder Polycarbonsäuren oder deren Derivate aus der Gruppe der Säurehalogenide, -amide oder Ester mit halogenfreien oder halogenhaltigen Diolen oder Polyolen durch Polykondensation zu Halogen-Polyestern und diese in einer nucleophilen Substitutionsreaktion mit einem Leichtmetallazid zu azidgruppenhaltigen Polyestern umgesetzt werden. Solche Polyester eignen sich insbesondere als Binder für Treib- und Explosivstoffsysteme.

EP 0 462 367 A2

Die Erfindung betrifft ein Verfahren zur Herstellung energiereicher Polyester sowie deren Verwendung.

Elastische und insbesondere energiereiche Polymere werden als Binder in explosiven Systemen eingesetzt. Ihre ursprünglich auf Raketen-Festtreibstoffe beschränkte Anwendung wurde inzwischen auf Sprengstoffe und Treibladungspulver für Rohrwaffen ausgedehnt. Die Auswahl hierfür geeigneter Polymere hat sich unter anderem an den Möglichkeiten der Verarbeitbarkeit, an der Leistung, dem Abbrandverhalten sowie der mechanischen und chemischen Stabilität auszurichten. Dabei geht es insbesondere darum, trotz des Binderanteils einen höchstmöglichen Energieinhalt im System Treib- bzw. Explosivstoff/Binder zu erreichen. Dies erfordert günstige thermodynamische Eigenschaften der Binder, wie Bildungswärme, Bildungsenthalpie und Sauerstoffbilanz, und einen hohen Füllstoffanteil, der sich in der Regel aus Explosivstoffen, Oxidatoren, Metallpulvern und sonstigen Zusätzen zusammensetzt. Ferner sollen die mechanischen Eigenschaften und die Temperaturstabilität nicht ungünstig beeinflußt werden.

Die in solchen Systemen heute überwiegend angesetzten Binder sind reaktiv aushärtende Polyurethane, deren Darstellung durch Polyaddition von Di- bzw. Polyisocyanaten mit endhydroxilierten Polyethern, Polyestern oder Polybutadienen großtechnisch durchgeführt wird. Hierunter konnten sich jedoch nur Polyether und Polybutadiene durchsetzen, während Polyester neben Ihrer schlechten Verarbeitbarkeit (hohe Viskosität) und schlechtem Kaltversprödungsverhalten keine praktische Bedeutung erlangt haben ("Propellants Manufacture, Hazards and Testing" Advances in Chemistry Series 88, American Chemical Society 1969 Seite 87-89).

Da bei den bekannten Bindern der Füllungsgrad an Feststoffen durch die Forderung nach guter Verarbeitbarkeit und nach ausreichender Elastizität begrenzt ist, sind in neuerer Zeit Kunststoffbinder entwickelt worden, die selbst explosivstoffartige Eigenschaften besitzen. So sind Polymere mit Nitro- (-NO₂), Fluordinitro- [FC(NO₂)₂-], Difluoramino- (-NF₂), Nitrat(-ONO₂) bzw. Nitramingruppen (-N-NO₂-) entwickelt worden. Diese "aktiven" Binder haben jedoch keine breite Anwendung gefunden, da sie entweder in der Herstellung unwirtschaftlich sind oder aber unbefriedigende mechanische Eigenschaften oder mangelnde chemische Stabilität aufweisen. Hingegen haben sich Polymere mit Azido- bzw. Azidomethylgruppen als Energieträger gut eingeführt. Hierzu zählen vor allem 3,3-Bis(azidomethyl), oxetan (Chem. Abstr. 97, 110 490 (1982), Chem. Abstr. 97, 74 986 (1982) und vornehmlich die als GAP bezeichneten Glycidylazid-Polymere - Poly-(azido-methyl)-etylenoxid - (US-A-3 645 917 und 4 268 450).

Diese azidgruppenhaltigen Polymere haben sich als energiereiche Binder für Explosivstoffsysteme als gut geeignet erwiesen. Bei den bisher bekannten azidgruppenhaltigen Polymeren handelt es sich ausschließlich um Polyether mit funktionellen Hydroxylendgruppen.

Der Erfindung liegt die Aufgabe zugrunde, andere energiereiche Polymere auf Polyester-Basis wirtschaftlich darzustellen.

Diese Aufgabe wird erfindungsgemäß dadurch gelöst, daß Di- oder Polycarbonsäuren oder deren Derivate aus der Gruppe der Säurehalogenide, -amide oder Ester mit Diolen oder Polyolen, von denen wenigstens eine der Ausgangsverbindungen - die Carbonsäuren bzw. deren Derivate oder die Alkohole - Halogengruppen aufweisen, durch Polykondensation zu Halogen-Polyestern und diese in einer nucleophilen Substitutionsreaktion mit einem Leichtmetallazid zu azidgruppenhaltigen Polyestern umgesetzt werden.

Als Ausgangsverbindungen kommen beispielsweise Oxalsäure (HOOC-COOH), Malonsäure (HOOC-CH₂-COOH), Bernsteinsäure (HOOC-(CH₂)₂-COOH), Glutarsäure (HOOC-(CH₂)₃-COOH) etc. in Frage. Auch halogen- bzw. halogenalkylgruppenhaltige Dicarbonsäuren und deren Derivate sind geeignet. Als ein Vertreter sei hier Bis-(halogenmethyl)-malonsäure(-ester) [(XCH₂)₂C-(COOR)₂, X = Halogen; R = H, Alkyl)] genannt. Ebenso können aromatische und heterocyclische Di- und Polycarbonsäuren - halogenfrei oder halogenhaltig - eingesetzt werden.

Als Diolkomponenten können halogen- bzw. halogenalkylgruppenhaltige Diole, z.B. 2,2-Bis-(bromomethyl)-1,3-propandiol (HOCH₂ C(CH₂Br)₂CH₂OH), 3-Chlor-1,2-propandiol (HOCH₂-CH(OH)-CH₂Cl), 1,1', 2,2'-Tetra(bromomethyl)-1,3-ethandiol (HO-C (CH₂Br)₂C(CH₂Br)₂-OH) oder halogenfreie Alkohole, wie Glykol, Diethylenglykol, Glycerin oder Pentaerythrit eingesetzt werden. Ebenso eignen sich halogenhaltige oder halogenfreie aromatische und heterocyclische Diole und Polyole.

Für die Bildung der Halogen-Polyester ist nur notwendig, daß eine der Ausgangsverbindungen, nämlich die Carbonsäuren bzw. deren Derivate oder die Alkohole Halogen- oder Halogenalkylgruppen als Halogen-Lieferant für die Bildung des Halogen-Polyesters enthalten.

Die Umsetzung wird vorzugsweise so geführt, daß Halogen-Polyester mit einem Molekulargewicht von 500 bis 20.000 g/mol. entstehen. Das Molekulargewicht läßt sich in einfacher Weise durch einen definierten Überschuß einer der Reaktionskomponenten - Carbonsäure oder Diol bzw. Polyol - steuern. Damit ergeben sich vergleichsweise niedrige Viskositäten, die eine einfache Weiterverarbeitung zu Kunststoffbindern im Gießverfahren gestatten und eine anschließende reaktive Aushärtung ermöglichen. Werden die Halogen-Polyester mit einem Überschuß an Diol oder Polyol herstellt, so enthalten die Polymerketten fast ausschließlich Hydroxylendgruppen, so daß ein Aushärten in bekannter Weise, z. B. mit Isocyanaten möglich ist. Wird hingegen mit einem Überschuß an Di- bzw. Polycarbonsäuren gearbeitet, so überwiegen die Carboxylendgruppen, so daß eine reaktive Aushärtung z. B. mit Aziridinen angezeigt ist.

Die Umsetzung der Di- oder Polycarbonsäuren oder deren Derivate mit den Diolen oder Polyolen kann in der Schmelze unter Inertgas erfolgen. Vorzugsweise jedoch erfolgt die Umsetzung in einem inerten Lösungsmittel, z.B. Benzol, Toluol, CCl₄ od. dgl. Die letztere Methode hat den Vorteil, daß die auftretenden Umsetzungstemperaturen durch den Siedepunkt des Lösungsmittels begrenzt werden, was für die Ausgangsverbindungen und das Umsetzungsprodukt schonend ist.

Die Darstellung der Halogen-Polyester kann auch dadurch erfolgen, daß Lactone, insbesondere Halogenlactone durch ringöffnende Polymerisation zu Halogen-Polyestern umgesetzt werden. Diese werden dann in der bereits beschriebenen Weise durch nucleophile Substitutionsreaktion zu azidgruppenhaltigen Polyestern weiterverarbeitet.

Die Umsetzung der Halogen-Polyester mit dem Leichtmetallazid erfolgt vorzugsweise in polaren, aprotischen Lösungsmitteln, wie Dimethylsulfoxid, Dimethylformamid, Methylenchlorid, Hexamethylphosphorsäuretriamid, Chloroform, Tetrahydrofuran, Dioxan oder auch Alkoholen.

Als Leichtmetallazid kommen vorzugsweise Alkaliazide, insbesondere Natriumazid in Frage.

Azidgruppenhaltige Polyester die auf die vorgenannte Weise hergestellt worden sind, eignen sich unter anderem hervorragend als Binder für feste Treib- oder Explosivstoffe. Sie weisen einen hohen Energieinhalt auf, der ihnen explosivstoffartige Eigenschaften verleiht.

**Ausführungsbeispiel**

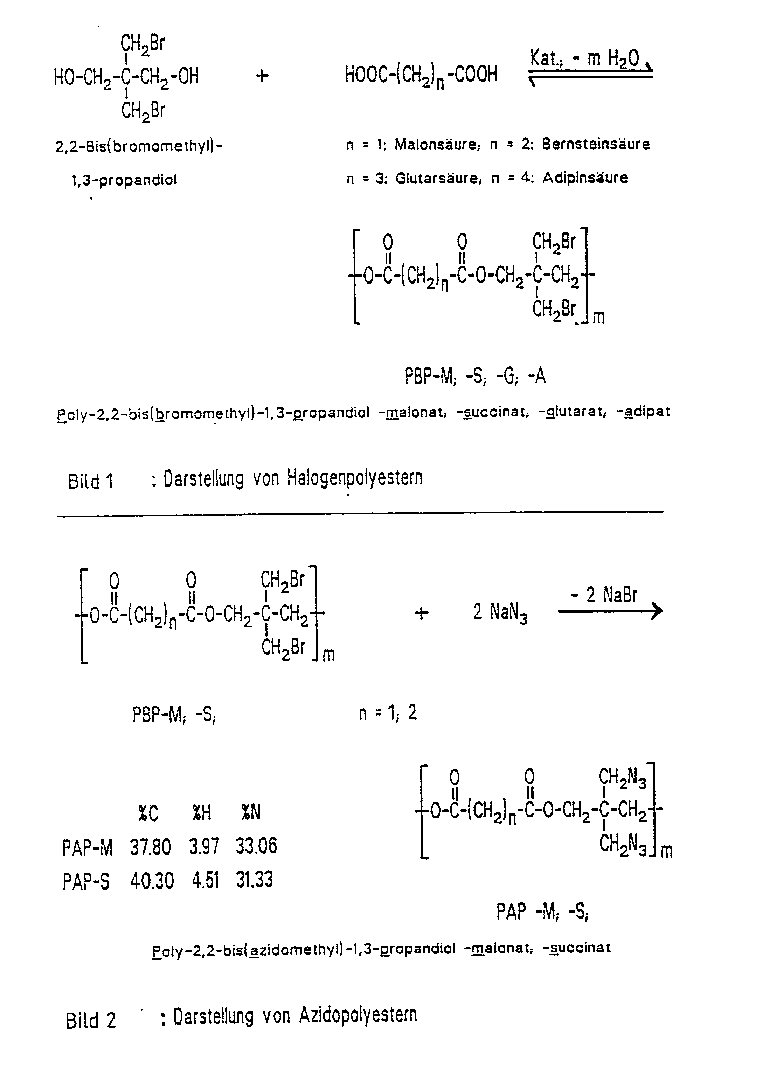

In Bild 1 ist die Darstellung von Halogen-Polyestern aus 2,2-Bis (bromomethyl)-1,3-propandiol und verschiedenen Dicarbonsäuren wiedergegeben. Die Kondensierung erfolgt in 20 %-iger Toluol-Lösung, wobei als Katalysator für die Veresterung z. B. p-Toluolsulfonsäure oder Schwefelsäure zugegeben wird. Das entstehende Wasser wird mittels Wasserabscheider aus dem Gleichgewicht entfernt. Je nach verwendeter Dicarbonsäure ergeben sich Reaktionszeiten von 2 bis 50 Stunden.

Durch das Ansatzverhältnis q zwischen Dicarbonsäure und Diol läßt sich das Molekulargewicht leicht steuern. Durch die in diesem Ausführungsbeispiel ausschließliche Verwendung von bifunktionellen Komponenten wird der lineare Aufbau der Polyester unterstützt und durch Einsatz von definiertem Diolüberschuß lassen sich Polyester mit ausschließlich Hydroxyl-Endgruppen erhalten.

Der Ansatz wird auf Raumtemperatur gekühlt, wobei sich das Produkt aus der klaren Lösung als ölige Phase abscheidet. Nach Entfernen des Lösungsmittels, beispielsweise im Vakuum, erhält man das Rohprodukt als hochviskose, farblose Flüssigkeit. Der Halogen-Polyester wird anschließend beispielsweise in Dichlormethan gelöst und mit Wasser gewaschen. Nach dem Trocknen wird die Lösung säulenchromatographisch gereinigt und das Lösungsmittel abdestilliert. Das farblose Produkt weist je nach eingesetztem Dicarbonsäure/Diol-Verhältnis einen glasartig festen bis viskosen öligen Charakter auf. Die Ausbeute beträgt 80 bis 100 %.

In Bild 2 ist die Darstellung azidgruppenhaltiger Polyester wiedergegeben. Als Ausgangsverbindung dienen hier ein Malonat bzw. Succinat. Die Azidierung erfolgt mit Natriumazid in einem polaren, aprotischen Lösungsmittel, vorzugsweise Dimethylsulfoxid. Dabei wird Natriumazid im Überschuß mit etwa 20 mol.-% zugegeben. Unter Rühren bei 65 bis 70 Grad Celsius färbt sich die anfangs klare, farblose Lösung gelb bis orange. Es bildet sich ein Niederschlag von Natriumhalogenid. Nach einer Reaktionszeit von ca. 70 Stunden ist die Azidierung abgeschlossen. Nach Abkühlung auf Raumtemperatur wird das Reaktionsgemisch mit Wasser versetzt und mehrmals mit Dichlormethan extrahiert und die vereinigten organischen Phasen mit Wasser gewaschen. Nach dem Trocknen und säulenchromatographischer Reinigung sowie Entfernung des Lösungsmittels erhält man den Azidopolyester als viskose Flüssigkeit mit Ausbeuten von 80 bis 100 %.

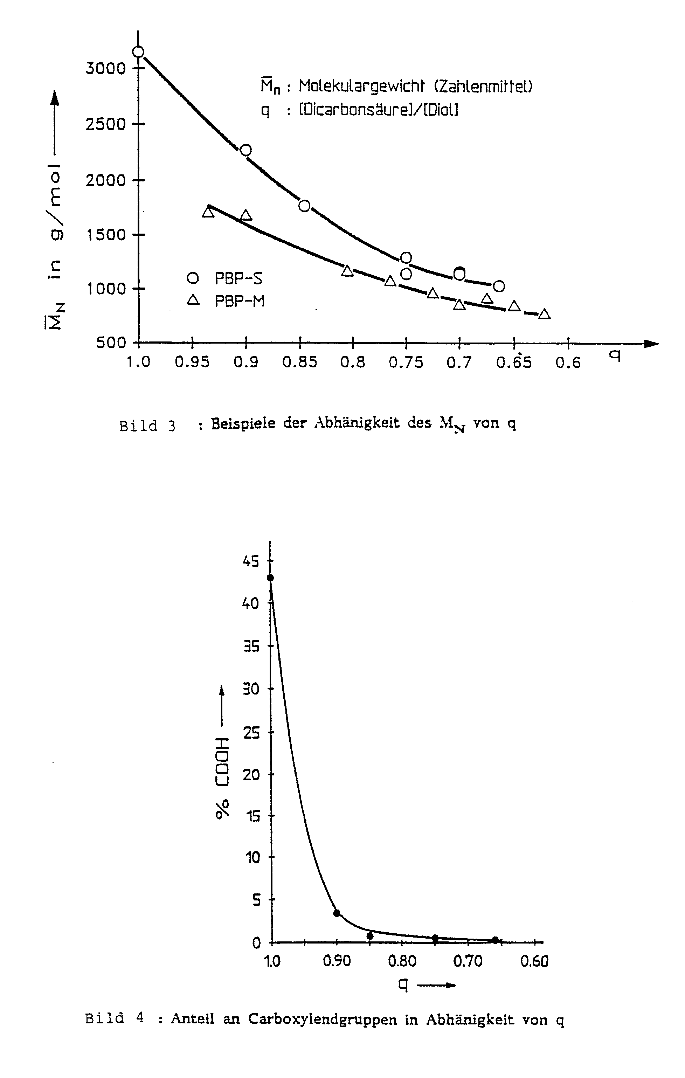

In Bild 3 ist für zwei ausgewählte Halogen-Polyester, nämlich Poly-2,2-bis(bromomethyl)-1,3-propandiol-malonat und succinat, das Molekulargewicht über dem Ansatzverhältnis q der Dicarbonsäure zum Diol im Bereich 1,0 bis 0,6 aufgetragen. Hieraus ist deutlich die Möglichkeit der Steuerung des Molekulargewichtes in Abhängigkeit von dem Ansatzverhältnis erkennbar.

Bild 4 zeigt den Anteil der Carboxylendgruppen in Abhängigkeit von dem vorgenannten Ansatzverhältnis q. Hieraus wird ersichtlich, daß mit abnehmendem q, also größer werdendem Überschuß an Diol die Carboxylendgruppen zugunsten von Hydroxylendgruppen abnehmen.

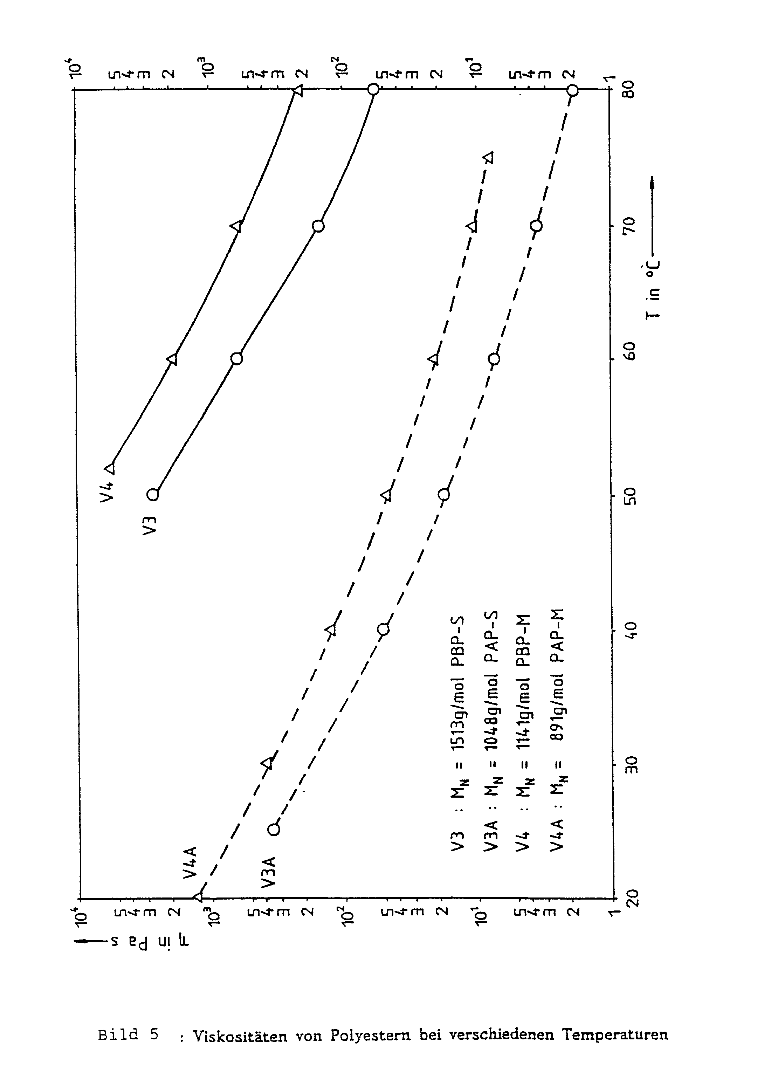

Bild 5 zeigt die Viskosität der Halogen-Polyester am Beispiel PBP-S und PBP-N und des hieraus jeweils hergestellten Azidopolyesters (PAP-S bzw. PAP-M) in Abhängigkeit von der Temperatur. Hieraus ist ersichtlich, daß die Azidopolyester deutlich niedrigere Viskositäten als die entsprechenden Halogenpolyester aufweisen. Der Faktor der Viskositätserniedrigung erreicht Werte bis zu 300.

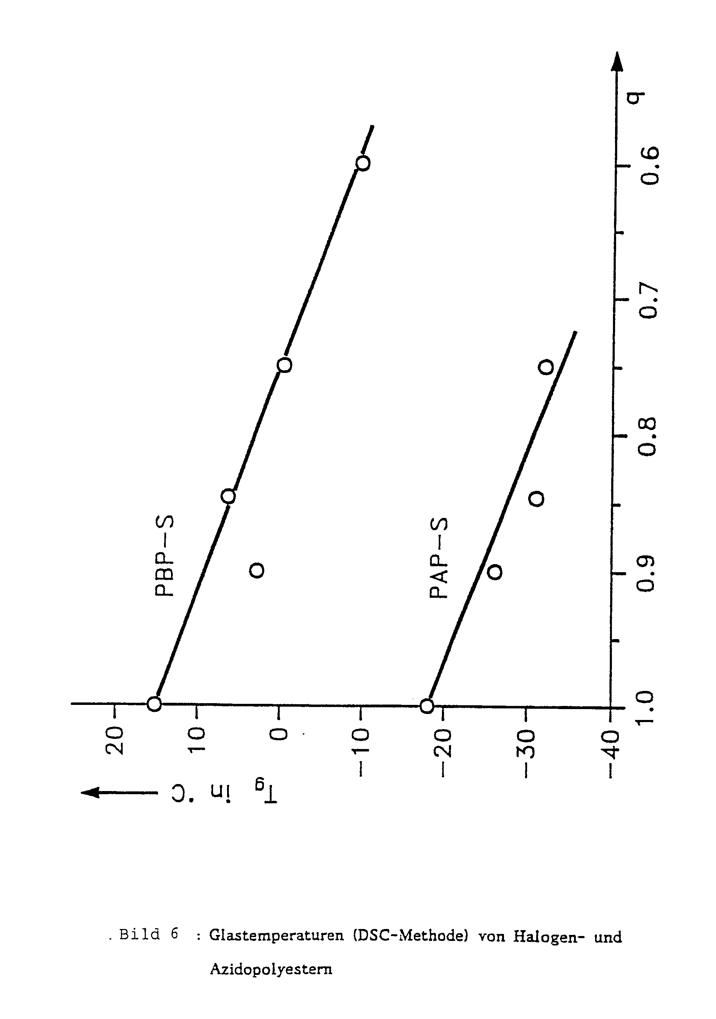

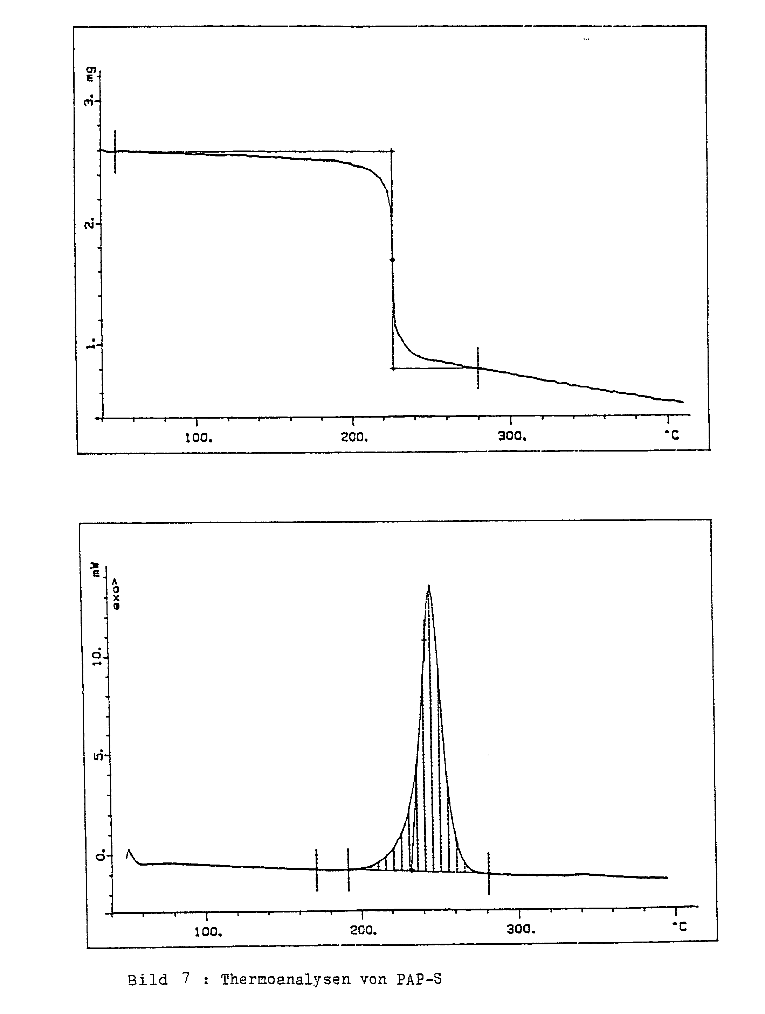

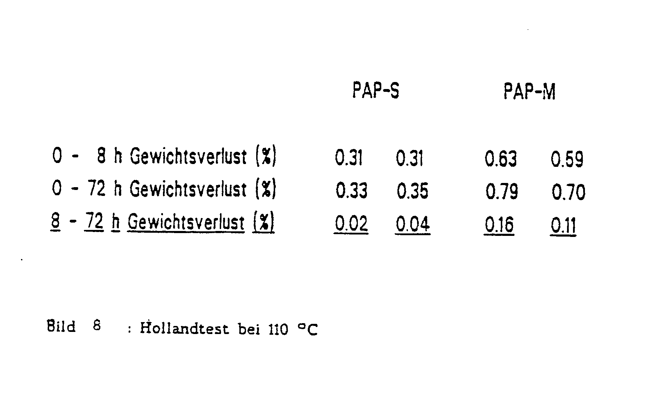

Bild 6 zeigt die Glastemperaturen wiederum in Abhängigkeit vom Ansatzverhältnis q, und zwar in Gegenüberstellung des Azidopolyesters und des entsprechenden Halogenpolyesters. Die Glastemperatur der Azidopolyester ist stark von der Kettenlänge abhängig. Sie liegt beim Azidopolyester um ca. 30 Grad Celsius niedriger als beim Halogenhomolog. Bei den untersuchten Azidopolyestern wurden Glastemperaturen von minus 30 bis minus 40 Grad Celsius festgestellt. Dieser Wert ist für den Einsatz als Binder für Treib- und Explosivstoffe sehr bedeutsam, da auch bei tiefen Temperaturen keine Versprödung des Systems eintreten soll. Es lassen sich insbesondere wesentlich niedrigere Glastemperaturen als bei herkömmlichen Polyester-Bindern erzielen, die eine relativ hohe Glastemperatur aufweisen. Diese Tatsache stand dem bisherigen Einsatz reiner Polyester-Binder in Treibstoff- und Explosivstoffsystemen im Wege. Es ist weiterhin die Annahme begründet, daß die Glastemperatur um so niedriger ist, je höher der Anteil der Azidgruppen ist.

Die Thermoanalysen gemäß Bild 7 zeigen im oberen Teil den Gewichtsverlust bei PAP-S in Abhängigkeit von der Temperatur und im unteren Teil die Zersetzungsenergie. Dabei wird deutlich der erhöhte Energieinhalt der Azidpolymere dokumentiert. Bei Temperaturen von 200 Grad Celsius kommt es zum exothermen Zerfall der Verbindungen, wobei eine Zersetzungsenergie von 1854 J/g frei wird. Im Temperaturbereich von 200 bis 240 Grad Celsius erfolgt eine sehr schnelle Gewichtsabnahme, die dann bei steigenden Temperaturen verlangsamt fortschreitet. Es ist davon auszugehen, daß in der ersten Stufe $N_2$ abgespalten wird, was zu dem schnellen Gewichtsverlust führt. Damit sind die Polyester in ihrem Zersetzungsverhalten dem bisher vornehmlich untersuchten GAP (Polyglycidylazid) vergleichbar.

Bild 8 schließlich zeigt den Gewichtsverlust zweier Vertreter der Azidopolyester nach dem Holland-Test, bei dem der Gewichtsverlust bei 72 stündiger Erhitzung auf 110 Grad Celsius ermittelt wird. Dabei ist besonders die Gewichtsabnahme zwischen 8 und 72 Stunden interessant. Im Falle des Malonsäureesters beträgt die Gewichtsabnahme 0,16 %, beim Bernsteinsäureester nur 0,04 %. Hiermit zeigt sich also eine hervorragende Temperaturbeständigkeit, die gleichfalls für den Einsatz in Treib- und Explosivstoff-Systemen von großer Bedeutung ist. Im übrigen weisen die beschriebenen hydroxylendgruppenhaltigen Azidopolyester nach der reaktiven Aushärtung mit Isocyanaten ausnahmslos gutes gummielastisches Verhalten auf.

**Patentansprüche**

1. Verfahren zur Herstellung energiereicher Polyester, dadurch gekennzeichnet, daß Di- oder Polycarbonsäuren oder deren Derivate aus der Gruppe der Säurehalogenide, -amide oder Ester mit Diolen oder Polyolen, von denen wenigstens eine der Ausgangsverbindungen - die Carbonsäuren bzw. deren Derivate oder die Alkohole - Halogengruppen aufweisen, durch Polykondensation zu Halogen-Polyestern und diese in einer nucleophilen Substitutionsreaktion mit einem Leichtmetallazid zu azidgruppenhaltigen Polyestern umgesetzt werden.

2. Verfahren zur Herstellung energiereicher Polyester, dadurch gekennzeichnet, daß Lactone, insbesondere Halogenlactone durch ringöffnende Polymerisation zu Halogen-Polyestern und diese in einer nucleophilen Substitutionsreaktion mit einem Leichtmetallazid zu azidgruppenhaltigen Polyestern umgesetzt werden.

3. Verfahren nach Anspruch 1, dadurch gekennzeichnet, daß als Di- oder Polycarbonsäuren halogen- oder halogenalkylhaltige aliphatische, aromatische oder heterocyclische Carbonsäuren eingesetzt werden.

4. Verfahren nach Anspruch 1, dadurch gekennzeichnet, daß als Carbonsäuren halogenhaltige Hydroxycarbonsäuren eingesetzt werden.

5. Verfahren nach einem der Ansprüche 1, 3 oder 4, dadurch gekennzeichnet, daß aliphatische, aromatische oder heterocyclische halogen- oder halogenalkylhaltige Diole oder Polyole eingesetzt werden.

6. Verfahren nach einem der Ansprüche 1 oder 2 bis 5, dadurch gekennzeichnet, daß die Halogen-Polyester mit einem Molekulargewicht von ca. 500 bis 20.000 g/mol. durch einen Überschuß einer der Reaktionskomponenten - Carbonsäure bzw. deren Derivat oder Diol bzw. Polyol - hergestellt werden.

7. Verfahren nach einem der Ansprüche 1 oder 2 bis 6, dadurch gekennzeichnet, daß die Halogen-Polyester mit einem Überschuß an Diol oder Polyol hergestellt und in bekannter Weise mit Isocyanaten reaktiv ausgehärtet werden.

8. Verfahren nach einem der Ansprüche 1 oder 2 bis 6, dadurch gekennzeichnet, daß die Halogen-Polyester mit einem Überschuß an Di- oder Polycarbonsäure oder deren Derivate hergestellt und in bekannter Weise mittels Aziridinen reaktiv ausgehärtet werden.

9. Verfahren nach einem der Ansprüche 1 oder 2 bis 8, dadurch gekennzeichnet, daß die Di- oder Polycarbonsäuren oder deren Derivate mit den Diolen oder Polyolen in der Schmelze unter Inertgas umgesetzt werden.

10. Verfahren nach einem der Ansprüche 1 oder 2 bis 8, dadurch gekennzeichnet, daß die Di- oder Polycarbonsäuren oder deren Derivate mit den Diolen oder Polyolen in einem inerten Lösungsmittel, z.B. Benzol, Toluol, Tetrachlorkohlenstoff od. dgl., umgesetzt werden.

11. Verfahren nach einem der Ansprüche 1 bis 10, dadurch gekennzeichnet, daß die Halogen-Polyester mit dem Leichtmetallazid in polaren, aprotischen Lösungsmitteln umgesetzt werden.

12. Verfahren nach einem der Ansprüche 1 bis 11, dadurch gekennzeichnet, daß polare Lösungsmittel aus der Gruppe Dimethylsulfoxid, Dimethylformamid, Hexamethylphosphorsäuretriamid, Methylenchlorid, Chloroform, Tetrahydrofuran, Dioxan, Alkohol eingesetzt werden.

13. Verfahren nach einem der Ansprüche 1 bis 12, dadurch gekennzeichnet, daß als Leichtmetallazid Natriumazid verwendet wird.

14. Fester Treib- oder Explosivstoff mit einem Brenn- und/oder Explosivstoff, einem Oxidationsmittel, einem Binder und gegebenenfalls einem Weichmacher, dadurch gekennzeichnet, daß als Binder azidgruppenhaltige Polyester verwendet werden.

$$
\begin{array}{c}
\quad\quad CH_2Br \\
\quad\quad | \\
HO-CH_2-C-CH_2-OH \\
\quad\quad | \\
\quad\quad CH_2Br
\end{array}
\quad + \quad
HOOC-(CH_2)_n-COOH
\quad \xrightarrow{\text{Kat.; } - m\,H_2O}
$$

2,2-Bis(bromomethyl)-

1,3-propandiol

n = 1: Malonsäure, n = 2: Bernsteinsäure

n = 3: Glutarsäure, n = 4: Adipinsäure

$$
\left[ O-\overset{\overset{\textstyle O}{\|}}{C}-(CH_2)_n-\overset{\overset{\textstyle O}{\|}}{C}-O-CH_2-\overset{\overset{\textstyle CH_2Br}{|}}{\underset{\underset{\textstyle CH_2Br}{|}}{C}}-CH_2 \right]_m
$$

PBP-M; -S; -G; -A

Poly-2,2-bis(bromomethyl)-1,3-propandiol -malonat; -succinat; -glutarat; -adipat

Bild 1 : Darstellung von Halogenpolyestern

---

$$
\left[ O-\overset{\overset{\textstyle O}{\|}}{C}-(CH_2)_n-\overset{\overset{\textstyle O}{\|}}{C}-O-CH_2-\overset{\overset{\textstyle CH_2Br}{|}}{\underset{\underset{\textstyle CH_2Br}{|}}{C}}-CH_2 \right]_m
\quad + \quad 2\,NaN_3 \quad \xrightarrow{- 2\,NaBr}
$$

PBP-M; -S;      n = 1; 2

|       | %C    | %H   | %N    |
|-------|-------|------|-------|
| PAP-M | 37.80 | 3.97 | 33.06 |
| PAP-S | 40.30 | 4.51 | 31.33 |

$$
\left[ O-\overset{\overset{\textstyle O}{\|}}{C}-(CH_2)_n-\overset{\overset{\textstyle O}{\|}}{C}-O-CH_2-\overset{\overset{\textstyle CH_2N_3}{|}}{\underset{\underset{\textstyle CH_2N_3}{|}}{C}}-CH_2 \right]_m
$$

PAP -M; -S;

Poly-2,2-bis(azidomethyl)-1,3-propandiol -malonat; -succinat

Bild 2 : Darstellung von Azidopolyestern

$\overline{M}_n$ : Molekulargewicht (Zahlenmittel)
q : [Dicarbonsäure]/[Diol]

○ PBP-S
△ PBP-M

Bild 3 : Beispiele der Abhänigkeit des $M_N$ von q

Bild 4 : Anteil an Carboxylendgruppen in Abhänigkeit von q

7

Bild 5 : Viskositäten von Polyestern bei verschiedenen Temperaturen

$\eta$ in Pa s

T in °C

V4

V3

V4A

V3A

V3  : $M_N$ = 1513 g/mol  PBP-S

V3A : $M_N$ = 1048 g/mol  PAP-S

V4  : $M_N$ = 1141 g/mol  PBP-M

V4A : $M_N$ =  891 g/mol  PAP-M

. Bild 6 : Glastemperaturen (DSC-Methode) von Halogen- und

Azidopolyestern

Bild 7 : Thermoanalysen von PAP-S

|                                | PAP-S |      | PAP-M |      |
| ------------------------------ | ----- | ---- | ----- | ---- |
| 0 -  8 h Gewichtsverlust (%)   | 0.31  | 0.31 | 0.63  | 0.59 |
| 0 - 72 h Gewichtsverlust (%)   | 0.33  | 0.35 | 0.79  | 0.70 |
| 8 - 72 h Gewichtsverlust (%)   | 0.02  | 0.04 | 0.16  | 0.11 |

Bild  8   : Hollandtest bei 110 °C